# FASCICULE DE BREVET EUROPEEN

(11) **EP 1 828 595 B1**
(45) Date de publication et mention de la délivrance du brevet: **17.03.2010**
(21) Numéro de dépôt: 05824502.8
(22) Date de dépôt: 01.12.2005
(51) Int. Cl.: F02N 11/04

(54) **GESTION DU FONCTIONNEMENT D'UN ALTERNO-DEMARREUR DE VEHICULE AUTOMOBILE**
VERWALTUNG DES BETRIEBS EINES KRAFTFAHRZEUG-STARTER-GENERATORS
MANAGING THE OPERATION OF A MOTOR VEHICLE ALTERNATOR STARTER

(30) Priorité: 02.12.2004 FR 0412821
(43) Date de publication de la demande: 05.09.2007
(73) Titulaire: VALEO EQUIPEMENTS ELECTRIQUES MOTEUR, 94000 Créteil Cedex (FR)
(72) Inventeur: LOUISE, Christophe, F-94160 Alforville (FR); PIERRET, Jean-Marie, F-75012 Paris (FR); GRANZIERA, Cyril, F-75015 PARIS (FR); BLONDEL, Gael, F-94370 Sucy en Brie (FR)
(74) Mandataire: de Lambilly Delorme, Marie Pierre
(86) Numéro de dépôt international: PCT/FR2005/002994
(87) Numéro de publication internationale: WO 2006/059008

(56) Documents cités:
- WO-A-2004/006423
- DE-A1- 10 059 038
- DE-A1- 10 254 069
- FR-A- 2 836 763
- FR-A- 2 838 576
- US-B1- 6 414 402

## Description

La présente invention concerne de manière générale la gestion du fonctionnement des machines électriques tournantes polyphasées réversibles, telles que les alterno-démarreurs.

L'invention trouve des applications, en particulier, dans le domaine des véhicules automobiles. Elle s'applique plus généralement à la commande de tout alterno-démarreur, ou moteur-alternateur ou encore moteur-alternateur-démarreur, à entraînement direct ou par courroie.

Dans un alternateur classique (c'est-à-dire non réversible), le régulateur peut être de type piloté. Il est alors interfacé avec un boîtier de commande, notamment un boîtier de contrôle moteur, par l'intermédiaire d'une liaison bas débit, par exemple une liaison LIN (Local Interconnect Network - "LIN Specification Package", Révision 2.0, 23 septembre 2003), lui transmettant des consignes de régulation. Ce type de système ne nécessite pas de commande particulière de la machine, en dehors du contrôle de la régulation.

Dans un système comprenant d'une part une machine réversible, et d'autre part un (ou plusieurs) boîtier(s) de commande distant(s) pour assurer le contrôle de la machine, une électronique de puissance et de contrôle est intégrée dans ledit (ou l'un desdits) boîtier(s) distant(s). Cette électronique est ainsi placée dans un environnement thermique et vibratoire moins défavorable que l'environnement de la machine.

Actuellement, on cherche néanmoins à rapprocher l'électronique de puissance et de contrôle d'une part, et la machine d'autre part, afin notamment de réduire la longueur des câbles sur lesquels des puissances électriques importantes sont véhiculées (à savoir la puissance délivrée par des transistors MOS de l'onduleur qui alimente les bobinages induits de la machine). C'est pourquoi il a déjà été proposé un alterno-démarreur dans lequel une électronique de puissance et de contrôle est intégrée à l'arrière de la machine.

L'architecture d'un tel alterno-démarreur est décrite dans le document WO 04/006423. Cet alterno-démarreur est dit intégré en ce qu'il comprend un module de contrôle et de puissance pouvant être intégré dans ou sur le boîtier contenant l'ensemble électromécanique de la machine. Ce module comprend, d'une part, une unité de puissance ayant un pont de transistors MOS de puissance comme éléments redresseurs de tension (en mode alternateur) et comme éléments de commutation des enroulements de phase (en mode moteur), et, d'autre part, une unité de contrôle ayant des circuits pilotes ("Driver Circuits", en anglais) pour piloter les transistors ainsi qu'un circuit de gestion des drivers. Ce module de contrôle et de puissance assure la gestion de la régulation de la tension redressée (en mode alternateur), et également la gestion du démarrage (en mode démarreur). En d'autres termes, le contrôle de l'alterno-démarreur depuis l'extérieur se limite essentiellement à lui indiquer s'il doit fonctionner en mode démarreur ou en mode alternateur.

Toutefois, on assiste actuellement à une évolution de la fonction démarrage, avec l'apparition des algorithmes "Stop and Start" (arrêt du moteur thermique pendant les phases d'arrêt du véhicule, et redémarrage dès la première sollicitation du conducteur ou sur un autre critère) visant à générer des économies de carburant. Cette apparition d'un alterno-démarreur évolué s'accompagne de la prise en compte d'un nombre relativement élevé d'informations générées par des capteurs, d'une part, et de l'utilisation d'un logiciel relativement complexe (donc nécessitant une capacité mémoire de stockage relativement élevée, et une puissance de traitement relativement importante pour son exécution), d'autre part.

Or, l'implantation d'un connecteur multibroches (par exemple un connecteur à 36 voies) à l'arrière de l'alterno-démarreur pour recevoir les signaux des capteurs, et le fait de prévoir des ressources logicielles et de traitement relativement importantes au niveau de la machine, posent des problèmes de fiabilité et de coût, compte tenu de la sévérité de l'environnement thermique et vibratoire.

Par le document DE102 54069 A1 est connu un système formé d'un moteur thermique couplé à une machine électrique tournante réversible. La machine électrique comporte une électronique de contrôle et de puissance intégrée en communication avec un environnement du véhicule à travers un bus de type CAN.

Un objet de la présente invention est de proposer une alternative à la gestion du fonctionnement d'un alterno-démarreur répondant aux problèmes ci-dessus identifiés.

A cet effet, un premier aspect de l'invention propose un procédé pour faire fonctionner une machine électrique tournante polyphasée réversible dans un véhicule automobile tel que défini par la revendication 1 ci-annexée. Dans ce procédé, une gestion haut niveau de la machine est réalisée par une unité de commande distante qui transmet des informations, via une liaison de communication protocolaire déterminée, à un module de contrôle intégré dans ou à proximité immédiate de ladite machine qui effectue une gestion bas niveau de ladite machine en fonction desdites informations.

Lesdites informations sont des commandes bas niveau et le module de contrôle lorsqu'il est à proximité immédiate de la machine est situé par exemple à l'arrière de ladite machine.

De préférence, le module est un module de contrôle et de puissance.

On entend par gestion haut niveau d'une machine électrique tournante polyphasée réversible, notamment, la gestion complète des capteurs utiles à la gestion de la fonction démarrage (et re-démarrage) ainsi que des algorithmes d'arrêt/redémarrage automatique, et des algorithmes de gestion de l'état de charge et de diagnostique de la batterie. Cette gestion haut niveau comprend également des moyens permettant d'extraire et de traiter des informations circulant sur un bus de communication inter-systèmes du véhicule en vue d'établir des ordres simples nécessaires au fonctionnement de la machine via une liaison protocolaire inter systèmes ou dédiée. Cette opération est appelée « passerelle » dans le sens où elle permet de sélectionner les informations utiles pour la commande de la machine parmi toutes les informations qui transitent sur le bus inter-systèmes du véhicule, de les traiter et de piloter alors ladite machine en émettant des commandes bas niveau.

On entend, en effet, par gestion bas niveau d'une telle machine, notamment, les ordres indiquant à la machine si elle doit fonctionner en mode démarreur ou en mode alternateur, les consignes de régulation en mode alternateur, le diagnostique concernant le fonctionnement de la machine (gestion des défauts thermiques, électriques ou mécaniques).

Enfin, la gestion matérielle de la machine incluant le contrôle des transistors MOS de puissance appliquant les tensions de phases (en mode démarreur) ou effectuant le redressement synchrone (en mode alternateur) ainsi que la régulation du courant généré est effectuée sur la machine.

L'invention permet de limiter le nombre de connexions en entrée de l'alterno-démarreur, et la taille du logiciel embarqué dans l'alterno-démarreur. On obtient ainsi un alterno-démarreur évolué mais qui reste fiable, bien que la machine soit placée dans un environnement thermique et vibratoire très sévère. L'avantage se situe aussi au niveau du coût.

Dit autrement, le fractionnement de la gestion de fonctionnement de la machine en une partie haut niveau et une partie bas niveau permet de cumuler les avantages d'un contrôle déporté (isolation par rapport à l'environnement thermique et vibratoire très sévère, ressources logicielles et matérielles plus facilement disponibles) pour la gestion haut niveau, et les avantages d'un contrôle intégré (réduction de la longueur des liaisons entre les transistors MOS de puissance et les enroulements induits de la machine) pour la gestion bas niveau. De plus, cela offre la possibilité d'intégrer la gestion haut niveau dans une unité centrale de commande déjà existante et de ne pas remettre en cause la structure de la machine par rapport aux versions antérieures.

Un deuxième aspect de l'invention concerne une machine électrique tournante polyphasée réversible pour véhicule automobile telle que définie par la revendication 12 ci-annexée.

Un troisième aspect de l'invention concerne une unité de commande pour véhicule automobile telle que définie par la revendicatin 21 ci-annexée.

L'unité de commande peut être un boîtier de contrôle moteur, un boîtier de servitude intelligent (BSI), un boîtier de servitude moteur (BSM), une unité de déconnexion batterie, un boîtier de gestion de l'état de charge et de diagnostique d'une batterie ou encore un boîtier de gestion des commutations entre plusieurs batteries. En variante, notamment si les équipements précités n'ont pas assez de ressources matérielles et/ou logicielles, ou n'ont pas été prévus à cet effet, l'unité de commande peut prendre la forme d'une unité de commande dédiée. Cette unité peut s'interfacer avec l'un au moins des équipements précités, via un bus (dédié ou inter systèmes) tel qu'un bus CAN, ou équivalent. En outre la liaison protocolaire de communication peut être soit une liaison unifilaire de type LIN (dédiée ou inter systèmes), soit une liaison multifilaire de type CAN (dédiée ou inter systèmes).

Enfin, un quatrième aspect de l'invention propose un système comprenant une machine électrique tournante polyphasée réversible selon le deuxième aspect ci-dessus, et une unité de commande selon le troisième aspect ci-dessus, pour réaliser la gestion haut niveau de la machine, dans lequel ladite machine et ladite unité de commande sont distantes l'une de l'autre.

L'unité de commande peut être uniquement dédiée à la fonction de la gestion haut niveau de la machine, ou assurer d'autres fonctions simultanément.

La communication entre la machine et l'unité de commande distante (gestion haut niveau) doit permettre de transmettre les informations nécessaires au bon fonctionnement de la machine tout en assurant la robustesse et la sûreté de fonctionnement malgré l'environnement thermique et vibratoire sévère dans lequel elle se trouve. Les informations précitées sont relatives, en particulier, au choix du mode de fonctionnement de la machine (en mode alternateur ou en mode démarreur), aux ordres de démarrage, aux ordres de re-démarrage, à l'interruption d'un démarrage en cours, aux consignes de régulation, aux consignes de charge progressive, au diagnostique de la machine, etc.

C'est pourquoi, une ou plusieurs commandes de fonctionnement bas niveau sont transmises, de façon redondante, de l'unité de commande distante vers la machine, via des liaisons filaires additionnelles respectives. Ces commandes peuvent comprendre en particulier une commande d'inhibition du démarrage et/ou une commande de démarrage.

Ainsi, les informations nécessaires au bon fonctionnement de la machine (choix du mode de fonctionnement de la machine, ordre de démarrage, ordre de re-démarrage, interruption d'un démarrage en cours, consignes de régulation, consignes de charge progressive, diagnostique de la machine...) circulent sur la liaison de communication protocolaire, alors que dans le même temps la sûreté de fonctionnement du système dans un environnement thermique et vibratoire sévère est assurée par une redondance matérielle permettant par exemple l'inhibition d'un démarrage ou l'autorisation d'un démarrage d'urgence malgré une gestion logicielle défaillante ou la coupure de la liaison de communication protocolaire (ou une forte perturbation de celle-ci, occasionnant la perte de trames protocolaires).

Par ailleurs, selon un mode de réalisation non limitatif, une ou plusieurs commandes de fonctionnement bas niveau sont transmises, de la machine distante vers l'unité de commande, via des liaisons filaires additionnelles respectives. Ces commandes peuvent comprendre en particulier une information sur la vitesse de rotation de la machine.

Ainsi une information matérielle sur la vitesse de rotation de la machine peut permettre à l'unité de commande de savoir si la machine est en rotation (pour détecter une courroie cassée par exemple) même si le bus de communication est perturbé. Cette information peut avantageusement être utilisée par l'unité de commande pour détecter un glissement de la courroie par comparaison avec la vitesse de rotation du moteur thermique dans le cas où le débit du bus de communication protocolaire est trop faible pour effectuer un tel traitement.

D'autres caractéristiques et avantages de l'invention apparaîtront encore à la lecture de la description qui va suivre. Celle-ci est purement illustrative et doit être lue en regard des dessins annexés, sur lesquels :
- la figure 1 est un schéma illustrant le principe de gestion du fonctionnement d'une machine selon la présente invention;
- la figure 2 est un schéma illustrant un premier exemple de réalisation de la liaison de communication protocolaire, utilisant un bus CAN;
- la figure 3 est un schéma illustrant un second exemple de réalisation de la liaison de communication protocolaire, utilisant un bus LIN;
- la figure 4 est un graphique illustrant le référencement des niveaux de tension associés aux données logiques 1 et 0 sur un bus LIN;
- la figure 5 est un schéma simplifié d'un système complet, illustrant un problème de décalage de masse pouvant affecter la mise en oeuvre d'un bus LIN, et un exemple de solution pour y remédier;
- la figure 6 et la figure 7 sont des schémas simplifiés (boîtes noires) de circuits de translation de niveaux pouvant être utilisés dans un émetteur-récepteur LIN par l'intermédiaire duquel le module de puissance et de contrôle de la machine est relié au bus LIN;
- les figures 8 et 9 sont des exemple de réalisation des circuits de translation de niveaux des figures 6 et 7, respectivement; et,
- la figure 10 donne un schéma fonctionnel d'une unité de commande selon le troisième aspect de la présente invention.

Sur les dessins, des éléments identiques ou similaires portent les mêmes références à travers toutes les figures.

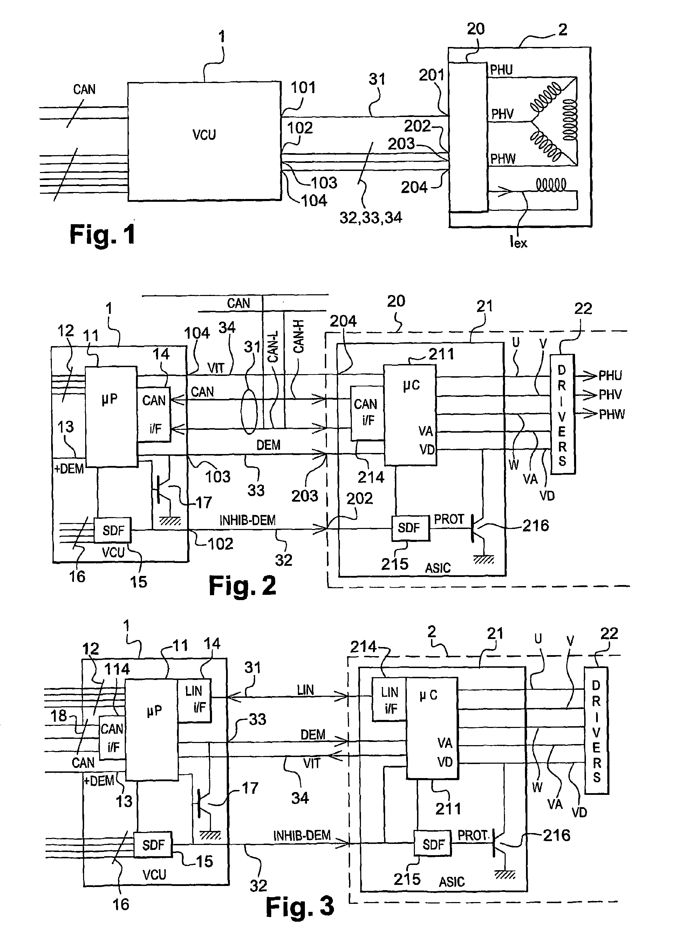

La figure 1 illustre le principe de la gestion d'une machine électrique tournante réversible selon la présente invention.

Une unité de commande 1 ou VCU (*Vehicule Control Unit*), est couplée à une machine électrique tournante réversible 2, telle qu'un alterno-démarreur, et plus particulièrement à un module de contrôle 20 de celui-ci.

De préférence, dans un mode de réalisation non limitatif, le module de contrôle 20 est un module de contrôle et de puissance. Dans la suite de la description, on prendra cet exemple.

Ce couplage est réalisé via une liaison de communication protocolaire 31, d'une part, et via une ou plusieurs liaisons filaires annexes ou additionnelles 32-34, d'autre part. Le VCU 1 et la machine 2 sont dites distantes l'une de l'autre, en ce sens que l'une est déportée par rapport à l'autre, c'est-à-dire qu'elle se situe à une distance non nulle. Les liaisons 31 et 32-34 présentent donc une longueur non nulle, par exemple un ou plusieurs mètres.

On rappellera qu'une liaison de communication protocolaire comporte un ou plusieurs fils permettant de transmettre plusieurs informations multiplexées en utilisant un protocole défini (codage de l'information) : LIN, CAN. Ces informations sont numériques. Le protocole CAN utilise en général deux fils, tandis que le protocole LIN un seul fil (liaison unifilaire). Par ailleurs, on rappellera qu'une liaison filaire est un fil permettant de transmettre une unique information analogique ou numérique.

L'unité 1 comprend une entrée/sortie 101, des sorties 102, 103 et une entrée 104 qui, en fonctionnement, sont couplées à la liaison 31, aux liaisons 32, 33 et à la liaison 34 respectivement. La machine 2 comprend une entrée/sortie 201, des entrées 202, 203 et une sortie 204 qui, en fonctionnement, sont couplées à la liaison 31, aux liaisons 32, 33, et à la liaison 34 respectivement.

La gestion haut niveau du fonctionnement de la machine 2 est réalisée par le VCU 1 qui pilote via la liaison de communication protocolaire 31 de ladite machine. Cette gestion comprend, notamment, la gestion des capteurs utiles à la fonction démarrage (et re-démarrage), ainsi qu'un ou plusieurs algorithmes d'arrêt/redémarrage automatique S&S couramment appelés dans la langue anglaise "Stop and Start", la gestion de l'état de charge et/ou le diagnostique de la batterie. A cet effet, le VCU 1 comprend des ressources matérielles (notamment un microprocesseur, de la mémoire, un connecteur multivoies, etc.) et des ressources logicielles relativement complexes, et en tout cas supérieures à celles présentes dans la machine 2.

Le VCU 1 transforme les informations capteurs et les informations provenant du bus d'intercommunication inter systèmes 18 en des commandes bas niveau ; la liaison de communication protocolaire 31 permet de transmettre ces commandes bas niveau au module d'électronique de puissance et de contrôle 20 ; et enfin ledit module 20 permet la gestion bas niveau de la machine 2 en traduisant ces commandes bas niveau en des ordres matériels transmis aux circuits pilotes 22.

En pratique, le module 20 peut être situé à l'intérieur du boîtier de la machine 2, ou à sa proximité immédiate, par exemple fixé à l'arrière de celui-ci.

Cette électronique comprend essentiellement un circuit dédié, par exemple un ASIC (« *Application Specific Integrated Circuit* ») pour la partie contrôle, et des circuits drivers de transistors MOS pour la partie puissance.

Le module 20 assure également la gestion matérielle de la machine 2, notamment :
- la commande des transistors MOS de puissance de l'alterno-démarreur via les drivers 22, lesdits MOS appliquant les tensions de phases PHU, PHV et PHW (en mode démarreur) ou effectuant le redressement synchrone (en mode alternateur), et
- la génération du courant d'excitation lex du rotor (en mode alternateur) pour la régulation de la tension redressée.

On notera que, dans un mode de réalisation avantageux non limitatif, pour assurer la sûreté de fonctionnement, notamment en cas de défaillance logicielle dans le VCU 1 ou en cas de coupure (ou de forte *perturbation*) de la liaison de communication protocolaire 31, une ou plusieurs commande de fonctionnement bas niveau peuvent être transmises, de façon redondante, depuis l'unité de commande 1 vers le système 2 via la (ou les) liaison(s) filaire(s) additionnelle(s) 32, 33. Par exemple, ces commandes peuvent permettre d'assurer l'inhibition du démarrage du véhicule ou au contraire un démarrage d'urgence.

La transmission des commandes de fonctionnement bas niveau via la (ou les) liaison(s) filaire(s) additionnelle(s) 32, 33 est dite redondante, en ce sens qu'elle a le même effet (du moins en conditions normales de fonctionnement) que la transmission simultanée ou quasi simultanée d'informations correspondantes via la liaison de communication protocolaire 31.

On notera que cette redondance permet à la machine 2 de détecter une situation de défaillance du VCU 1 ou une cassure (ou une forte perturbation) de la liaison 31. En effet, la surveillance continue de la concordance entre les informations reçues (ou non reçues) via la liaison de communication protocolaire 31 et les commandes de fonctionnement bas niveau reçues via les liaisons filaires additionnelles, permet de détecter une telle situation.

Par ailleurs, dans un mode de réalisation avantageux non limitatif, une ou plusieurs commandes de fonctionnement bas niveau sont transmises, de la machine distante 2 vers l'unité de commande 1, via la (ou les) liaison(s) filaire(s) additionnelle(s) respective(s) 34. Par exemple, ces commandes peuvent comprendre en particulier une information sur la vitesse de rotation de la machine.

De façon préférentielle, des éléments sont associés aux liaisons filaires 32-34 pour permettre la transmission matérielle de ces commandes de fonctionnement bas niveau précitées. Dans un exemple non limitatif, ces éléments associés sont des drivers pour l'émission, des filtres et/ou amplificateurs pour la réception. Avantageusement, ces éléments sont toutefois des éléments matériels (« hardware ») uniquement. Ainsi, les liaisons 32-34 restent opérationnelles même en cas de défaillance logicielle.

Le schéma de la figure 2 illustre un premier exemple non limitatif de mise en oeuvre de la présente invention: la liaison de communication protocolaire 31 est un bus CAN (*Controller Area Network* - Norme ISO 11898).

Le VCU 1 comprend ici un microprocesseur (µP) 11, par exemple un microprocesseur 16 bits, relié à un ensemble de capteurs (non représentés) via une pluralité de lignes filaires 12. Le microprocesseur 11 est aussi relié à l'interrupteur de démarrage (non représenté) du véhicule via un fil 13, pour recevoir un signal +DEM de commande de démarrage. Le microprocesseur 11 exécute un programme de gestion pour, notamment, générer des commandes de gestion bas niveau de la machine 2. Ces commandes sont transmises, via une interface 14 du bus CAN sur son entrée/sortie 101, sur la liaison 31 en respectant les spécifications protocolaires du bus CAN, à destination de la machine 2. On notera que, réciproquement, le microprocesseur 11 reçoit, via la liaison 31 et l'interface 14, des informations de retour incluant notamment des informations de diagnostique, et via la liaison 34 et l'interface 104 une information Vit sur la vitesse de rotation de la machine.

On notera que le VCU 1 comprend aussi une unité de sûreté de fonctionnement (SDF) 15, qui est reliée à un ensemble de capteurs (non représentés) via une pluralité de lignes filaires 16. En fonction des signaux générés par ces capteurs, l'unité 15 génère une information qui est transmise au microprocesseur 11, et de plus, l'unité 15 génère un signal Inhib_DEM d'inhibition du démarrage ou un signal DEM de démarrage, selon le cas (par exemple capteur de boîte vitesse signalant qu'une vitesse est engagée), qui est transmis sur la liaison filaire annexe 32 ou la liaison 33, respectivement, à destination de la machine 2. Ce signal Inhib_DEM ou DEM est interprété par la machine comme la commande de fonctionnement bas niveau issue de la liaison de communication protocolaire 31. Ainsi, il permet l'inhibition du démarrage ou un démarrage forcé, respectivement, malgré une gestion logicielle défaillante ou une coupure (ou une forte perturbation) de la liaison de communication protocolaire 31. L'unité 15 est entièrement réalisée en logique câblée, afin de ne pas être affectée par une quelconque défaillance logicielle.

Dans une variante, la liaison 13 peut être directement couplée à la liaison 33, en sorte que le signal DEM se confond avec le signal +DEM.

La machine 2 comprend quant à elle, ainsi qu'il a déjà été dit plus haut, un module 20 de contrôle et de puissance, assurant notamment la gestion bas niveau du fonctionnement de la machine 2 et la gestion matérielle. Lesdites gestions bas niveau et matérielle sont effectuées par la partie contrôle comprenant un circuit électronique 21 tel qu'un ASIC. La gestion matérielle est également effectuée par la partie puissance comprenant un ensemble de circuits drivers 22 pour piloter les transistors MOS de puissance de l'onduleur (non représenté) de la machine en générant les signaux PHU, PHV et PHW précités.

Le circuit 21 comprend un circuit logique tel qu'un microcontrôleur (µC) 211, par exemple un microcontrôleur 8 bits. A partir des informations de commande bas niveau qu'il reçoit du VCU 1, sur son entrée/sortie 201 via la liaison 31 et une interface 214 du bus CAN, le microcontrôleur 211 génère des signaux de commande matériels des drivers de la machine. Ces signaux sont transmis aux circuits drivers 22. Ils comprennent des signaux de commande U, V et W, respectivement pour chacune des phases de la machine (ici pour une machine triphasée), un signal VA commandant un fonctionnement des circuits drivers en mode alternateur (quand VA=1) et un signal VD commandant un fonctionnement des circuits drivers en mode démarreur (quand VD=1).

Le microcontrôleur 211 reçoit aussi le signal DEM via l'entrée 203 de la machine et la liaison 33. En fait, le signal DEM peut correspondre soit à un ordre de pré-fluxage rapide de la machine, soit à un ordre de démarrage par défaut. Dans le premier cas, le signal DEM permet de donner le temps nécessaire au courant d'excitation des enroulements inducteurs de la machine, en mode démarreur, d'atteindre sa valeur maximum avant de commencer à commander la commutation des phases. Ce pré-fluxage dure environ 150 ms à froid et environ 80 ms à chaud. Dans le second cas, le signal DEM permet de démarrer le véhicule même en cas de dysfonctionnement du VCU 1, ou sur la liaison 31. C'est une mesure de sécurité pour l'utilisateur. Lorsqu'un signal DEM actif est reçu par le microcontrôleur 211, celui-ci pilote le passage à 1 du signal VD.

Le VCU 1 comprend un moyen 17, par exemple un transistor NPN, disposé entre les lignes 32 et 33 permettant de forcer le signal DEM à zéro (DEM= 0). Le signal Inhib_DEM est aussi fourni en entrée du microprocesseur 11, pour prise en compte éventuelle.

Le circuit 21 comprend aussi une unité de sûreté de fonctionnement 215, avantageusement réalisée entièrement en logique câblée.

L'unité 215 reçoit le signal Inhib_DEM via l'entrée 202 de la machine et via la liaison filaire annexe 32. Lorsqu'un signal Inhib_DEM actif est reçu, l'unité 215 génère un signal Prot. Ce signal, via par exemple un transistor NPN 216 utilisé en inverseur de tension, force le signal VD à zéro (VD=0). Il en résulte que le démarrage de la machine (et donc le démarrage du véhicule) est inhibé. En effet, même si le circuit 211 tente de mettre le signal VD à l'état haut (VD=1) en application des informations de gestion bas niveau reçues via la liaison protocolaire 31, le signal VD restera à zéro (VD=0).

Bien entendu, d'autres commandes de fonctionnement bas niveau peuvent être reçues de façon redondante par la machine 2, via des liaisons filaires additionnelles respectives.

On notera que, par ailleurs, l'unité 215 signale l'apparition du signal Inhib_DEM au microcontrôleur 211. En mode de fonctionnement dégradé (cas où la ligne de communication protocolaire 31 est perturbée ou cassée), ceci constitue une alarme qui est transmise au microprocesseur 211. En effet, à défaut d'une concordance avec les informations de commande bas niveau reçues du VCU 1 via la liaison 31, le microprocesseur 211 peut détecter une situation de défaillance logicielle du VCU 1, ou une cassure (ou une forte dégradation) de la liaison 31. Dans ce cas, il peut aussi décider de mettre en oeuvre une routine appropriée.

Par ailleurs, on notera que l'unité 21 génère par l'intermédiaire de la sortie 204 et via la liaison 34 une information Vit sur la vitesse de rotation de la machine que ce soit en mode de fonctionnement dégradé ou mode de fonctionnement normal.

Dans le mode de mise en oeuvre représenté, la liaison 31 (i.e., le bus CAN) fait partie du bus CAN inter systèmes du véhicule, i.e. le bus reliant les systèmes tels que le contrôle moteur ECU ou le système de gestion de batteries. En variante, il peut s'agir d'un bus CAN dédié.

L'avantage du bus CAN est sa grande robustesse, résultant du fait que l'information est transportée en mode différentiel, entre les lignes CAN_H et CAN_L du bus. D'un autre côté, l'utilisation d'un bus CAN est pénalisante en termes de coût, en raison de la grande précision (de l'ordre de 0,1 %) de la fréquence d'horloge requise pour chaque dispositif relié audit bus, qui nécessite des oscillateurs à cristal relativement onéreux et en raison des ressources logicielles et mémoires nécessaires.

C'est pourquoi un autre mode de mise en oeuvre, illustré par le schéma de la figure 3, utilise un bus LIN en tant que liaison de communication protocolaire 31. Le protocole LIN est un protocole série unifilaire. La liaison LIN est une SCI (Serial Communication Interface) fonctionnant par exemple à 19200 bauds (bits/s), et reposant sur un principe maître/esclave. Le protocole LIN a été élaboré par un consortium d'industriels du secteur automobile. Il est moins rapide et moins robuste que le protocole CAN, mais son implémentation est beaucoup moins chère et beaucoup plus simple.

Dans le mode de mise en oeuvre conforme à la figure 3, l'interface 14 disposée entre le microprocesseur 11 du VCU 1 et le bus LIN 31, est une interface LIN standard. De plus l'interface 214 disposée entre le microprocesseur 211 de la machine 2 et le bus LIN 31, est une interface LIN modifiée par rapport à une interface LIN standard. On reviendra plus loin sur cette interface LIN modifiée 214.

Dans l'exemple de mise en oeuvre représenté, le bus LIN 31 est une liaison dédiée. Le VCU 1, et plus particulièrement son microprocesseur 11, est reliée à un bus inter systèmes 18, tel qu'un bus CAN, via une interface CAN 114. Ceci permet au VCU 1 de piloter d'autres systèmes et équipements dans le véhicule.

On va maintenant décrire un mode de réalisation de l'interface 214, aussi appelée émetteur-récepteur LIN ("*LIN transceiver*" en anglais) ou driver/récepteur de ligne ("*Line Driver*/*Receiver*" en anglais), dans le cas où la liaison de communication protocolaire 31 est une liaison LIN. Dans ce cas, l'information est portée par le niveau de la tension Vbus sur la liaison LIN.

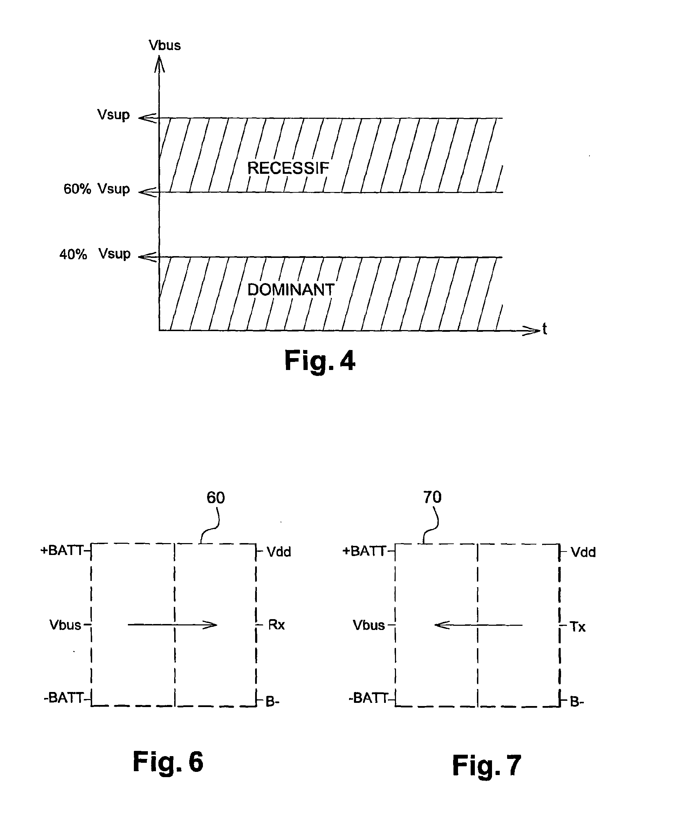

D'après des spécifications du protocole LIN, qui sont illustrées par le diagramme de la figure 4, le niveau de la tension Vbus correspond à un état "récessif" (information logique 1) si la tension Vbus est supérieure à une valeur de référence haute correspondant à 60 % d'une tension maximum Vsup. De même, le niveau correspond à un état "dominant" (information logique 0) si la tension Vbus est inférieure à une valeur de référence basse correspondant à 40 % de ladite tension maximum Vsup.

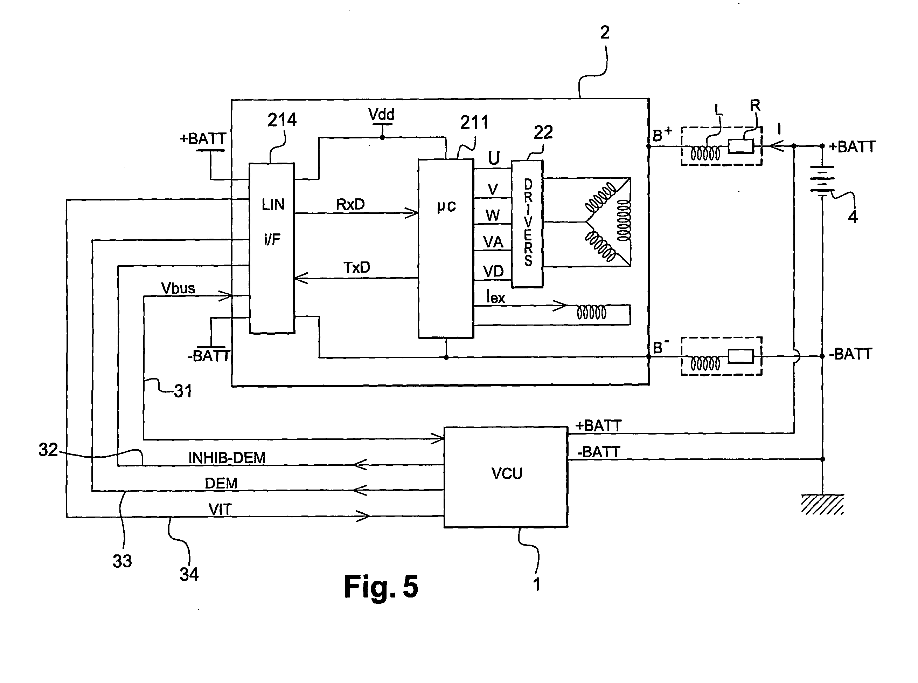

Des problèmes peuvent résulter, notamment lors d'un démarrage, en raison du référencement choisi pour la tension Vbus. Ces problèmes, et la manière d'y remédier, vont maintenant être exposés en référence au schéma de la figure 5.

Sur cette figure, on a représenté la machine 2 avec deux bornes d'alimentation positive et négative, respectivement B+ et B-. Par souci de commodité, dans ce qui suit, on confond ici les bornes d'alimentation et les potentiels électriques sur ces bornes. Le potentiel B- est une masse pour l'électronique de puissance de la machine 2, isolée de la masse du véhicule (masse châssis).

Les bornes d'alimentation B- et B+ sont reliées aux bornes positive et négative, respectivement +BATT et -BATT, de la batterie 4 du véhicule via des liaisons électriques (câblage) représentées par leur impédances L et R. La borne -BATT est reliée au châssis du véhicule. Le potentiel -BATT est donc la masse de la batterie et du véhicule (masse châssis). La tension +BATT (tension batterie), les signaux DEM et Inhib_DEM, ainsi que la tension Vbus sur le bus LIN, sont référencés par rapport à -BATT.

Les potentiels B+ et B- correspondent aux potentiels respectivement +BATT et -BATT, sauf lors du démarrage. En effet, à supposer que les portions de câble reliant la batterie 4 à la machine 2 aient une longueur de 1 mètre (hypothèse réaliste en pratique), elle présente une impédance selfique L de environ 1 µH. Or, lors du démarrage de l'alterno-démarreur, le courant I dans cette portion de câble passe de 0 à environ 600 A, en à peu près 1 µs.

En fonction de la loi de Lentz (V = - L.dl/dt), la différence de tension ΔV entre les bornes d'alimentation B+ et +BATT, et entre les bornes B- et -BATT, présenterait alors un pic d'environ 600 V. Néanmoins, les transistors MOS de l'onduleur de l'alterno-démarreur, grâce à leur diode interne respective, écrêtent cette surtension à environ 32V.

Au niveau de la batterie, la loi d'Ohm s'écrit ΔV = Rbat.Δl, où ΔV désigne la différence de tension entre la tension batterie à vide et la tension pendant le démarrage, Rbat la résistance interne de la batterie (environ 0,1Ω), et Δl le courant de démarrage (600Ampères). Il s'ensuit que la chute de tension au niveau de la batterie peut atteindre environ 6V.

Ainsi, il existe un offset d'environ ±13V entre les bornes B- et -BATT d'une part, et B+ et +BATT d'autre part, pendant environ 100µs à chaque commutation des transistors MOS de l'onduleur pendant la durée du démarrage. On appelle ce phénomène un décalage de masse. Il en résulte une perturbation de la communication lors d'un démarrage.

Pour que les valeurs de référence haute et basse référençant la tension Vbus sur la liaison LIN soient identiques côté transmission et côté réception de la communication, il convient d'utiliser la même tension haute Vsup du côté du VCU 1, comme du côté de la machine 2. En pratique, on prendra de préférence la tension +BATT de la borne positive de la batterie du véhicule (référencée par rapport à la borne négative de cette même batterie) comme tension maximum (Vsup=+BATT). A cet effet, l'émetteur-récepteur LIN 214 est alimenté entre - BATT et +BATT et non entre B- et B+. Dit autrement les bornes d'alimentation de l'émetteur-récepteur 214 sont reliées aux bornes +BATT et -BATT de la batterie 4 par des liaisons qui sont distinctes de liaisons reliant des bornes d'alimentation B+ et B- de la machine 2 aux bornes de la batterie. Cette solution oblige à prévoir deux liaisons d'alimentation supplémentaires, mais elle permet de pallier le problème de décalage de masse lors d'un démarrage.

Ainsi, à chaque instant, la référence de transmission est identique à celle de réception. De préférence, on veillera à avoir des filtres identiques dans le VCU 1 et dans la machine 2, afin d'avoir les mêmes constantes de temps pour les variations de tension lors d'un démarrage.

Lorsque l'électronique de contrôle de la machine 2 est alimentée entre B- et une tension fixe Vdd, par exemple égale à 5 V (laquelle est par ailleurs générée à partir de B+), un problème se pose. Ce problème résulte à nouveau du référencement de la tension Vbus sur la liaison LIN, dont on a vu qu'il est perturbé par le décalage de masse précité. C'est celui de la communication entre l'émetteur-récepteur 214 référencé par rapport à -BATT et le microprocesseur 211 référencé par rapport au B-.

Afin de résoudre ce problème, l'émetteur-récepteur LIN peut comprendre deux circuits translateur de niveaux ("level-shifter", en anglais), l'un pour chaque sens de la communication.

Un premier circuit translateur de niveaux 60 est représenté schématiquement à la figure 6. Il permet de convertir le signal Vbus référencée entre le potentiel de masse -BATT et le potentiel positif +BATT de la batterie du véhicule, en un signal de réception Rx référencé entre la masse B- de la machine et la tension d'alimentation fixe Vdd de l'électronique de la machine.

Un second circuit translateur de niveaux 70, qui est représenté schématiquement à la figure 7, permet d'effectuer la conversion inverse. Il permet en effet de convertir un signal de transmission Tx référencé entre la masse B- et la tension d'alimentation Vdd, en un signal Vbus référencé entre le potentiel de masse -BATT et le potentiel positif +BATT de la batterie du véhicule.

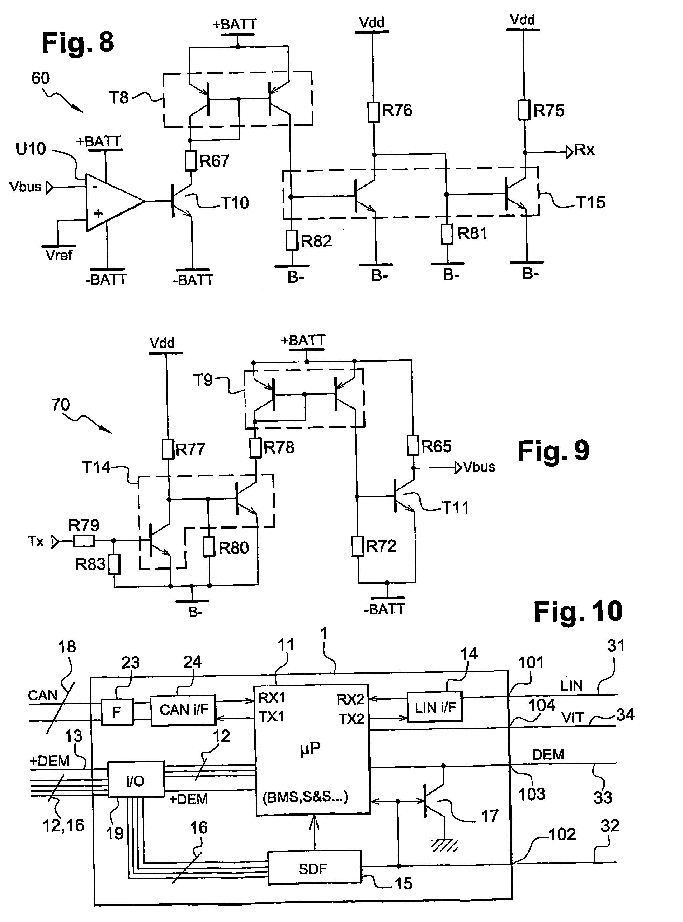

La figure 8 donne un exemple de réalisation non limitatif du circuit translateur de niveaux 60 représenté schématiquement à la figure 6.

Le circuit 60 comprend ici un comparateur U10 dont l'entrée inverseuse reçoit le signal Vbus du bus LIN et dont l'entrée non inverseuse reçoit une tension de référence Vref, qui est par exemple générée à l'aide d'un pont de résistances (non représenté). Le signal Vbus étant référencé entre les potentiels -BATT et +BATT, le comparateur U10 est alimenté entre ces potentiels. La sortie du comparateur U10 est reliée, via un transistor NPN T10 monté en inverseur et une impédance R67, à l'entrée d'une paire T8 de transistors PNP montés en miroir de courant. Les émetteurs des transistors de la paire T8 sont couplés à la borne +BATT. La sortie de la paire T8 est couplée à l'entrée d'une paire T15 de transistors NPN cascadés (c'est-à-dire que le collecteur du transistor amont de la paire T15 est relié à la base du transistor aval de la paire T15). Les bases des transistors amont et aval de la paire T15 sont couplés à la borne B- via des impédances respectivement R82 et R81. De même, leurs émetteurs sont couplés à la borne B-. En outre, leurs collecteurs sont couplés à la borne Vdd via des impédances respectivement R76 et R75. La sortie du circuit 60 est prise sur le collecteur du transistor aval de la paire T15, et délivre le signal Rx qui est ainsi référencé entre les potentiels B- (masse de la machine) et Vdd.

Dans un mode de réalisation, les impédances R67, R81, R76 et R75 sont des résistances de 10KΩ et l'impédance R82 est une résistance de 4,7KΩ.

La figure 9 donne un exemple de réalisation non limitatif du circuit translateur de niveaux 70 représenté schématiquement à la figure 7.

Le circuit 70 comprend une paire T14 de transistors NPN cascadés (c'est-à-dire que le collecteur du transistor amont de la paire T14 est relié à la base du transistor aval de cette paire). La base du transistor amont de la paire T14 reçoit le signal Tx à travers une impédance R79. Le signal Tx est référencé entre les bornes B- et Vdd. Les bases des transistors amont et aval de la paire T14 sont couplés à la borne B- par une impédance respectivement R83 et R80. Le collecteur du transistor amont de la paire T14 est couplé à la borne Vdd via une impédance R77. Le collecteur du transistor aval de la paire T14 est connecté, via une impédance R78, à l'entrée d'une paire T9 de transistors PNP montés en miroir de courant, dont les émetteurs sont couplés à la borne +BATT. La sortie de la paire T9 est couplée à l'entrée d'un transistor NPN T11 monté en inverseur. La base du transistor T11 est couplée à la borne -BATT à travers une impédance R72. De même, son émetteur est couplé à la borne - BATT. Enfin, son collecteur est couplé à la borne +BATT via une impédance R65. La sortie du circuit 70 est prise sur le collecteur du transistor T11, et délivre la tension Vbus qui est ainsi référencée entre les potentiels -BATT et +BATT.

Dans un exemple, les impédances précitées du circuit 70 sont des résistances, et R65=30KΩ, R72=R78=10KΩ, R79=100KΩ, R83=47KΩ, et R77=R80=4,7KΩ.

A la figure 10, on a représenté schématiquement un mode de réalisation d'une unité de commande VCU 1, convenant pour être disposée entre d'une part la machine 2, et d'autre part, par exemple, un boîtier de contrôle moteur (ECU), un boîtier de servitude intelligent (BSI), un boîtier de servitude moteur (BSM), une unité de déconnexion batterie, un boîtier de gestion de l'état de charge et/ou un boîtier de gestion du diagnostique de la batterie, ou encore un boîtier de gestion de commutation entre plusieurs batteries. Ce mode de réalisation est particulièrement adapté aux applications dans lesquelles les équipements précités n'ont pas assez de ressources matérielles et/ou logicielles pour implémenter la gestion haut niveau de la machine, ou n'ont pas été prévus à cet effet. L'unité de commande 1 prend ainsi la forme d'une unité de commande dédiée.

L'unité de commande dédiée 1 comprend, en plus des éléments 11-18 déjà présentés plus haut en regard du schéma de la figure 2, un bloc de gestion des entrées 19, réalisé par exemple en logique câblée. Le bloc 19 reçoit les signaux de capteurs à travers les liaisons 12,16 ainsi que le signal de commande de démarrage +DEM à travers la liaison 13. Il délivre une partie 12 des signaux de capteurs ainsi que le signal +DEM au microprocesseur 11, ainsi qu'une autre partie 16 des signaux de capteurs à l'unité de sûreté de fonctionnement 15. De plus, l'unité 1 comprend un filtre 23 suivi d'un trancepteur CAN 24, disposés entre le bus CAN inter systèmes 18 et le microprocesseur 11. On note RX1 et TX1 les signaux respectivement reçus de et transmis à l'émetteur-récepteur 24 par le microprocesseur 11. De même, on note RX2 et TX2 les signaux respectivement reçus de, et transmis à l'émetteur-récepteur 14.

Le microprocesseur 11 est adapté pour piloter la gestion haut niveau de la machine. Il comprend notamment les algorithmes de BMS (*Battery Management System*) et de S&S (*Stop and Start*). A cet effet, il comprend une entrée-sortie 101 qui est adaptée pour être connectée au bus LIN 31. L'entrée 101 est reliée au microprocesseur 11, via l'émetteur-récepteur 14. De plus, l'unité 1 comprend des sorties 102 et 103, qui sont adaptées pour être reliées aux liaisons additionnelles respectivement 32 et 33. La sortie 102 est couplée à l'unité 15, pour transmettre le signal Inhib_DEM vers la machine via la liaison 32. De même, la sortie 103 est couplée au microprocesseur 11 pour transmettre le signal DEM vers la machine via la liaison 33.

## Revendications

1. Procédé pour faire fonctionner une machine électrique tournante polyphasée réversible (2) dans un véhicule automobile, suivant lequel une gestion haut niveau de la machine est réalisée par une unité de commande (1) distante qui transmet des informations, via une liaison de communication protocolaire (31) déterminée, à un module de contrôle (20) intégré dans ou à proximité immédiate de ladite machine (2) qui effectue une gestion bas niveau de ladite machine (2) en fonction desdites informations, **caractérisé en ce qu'**une ou plusieurs commandes de fonctionnement bas niveau (Inhib_DEM, DEM) sont transmises, de façon redondante, de l'unité de commande (1) distante vers la machine (2), via des liaisons filaires additionnelles respectives (32,33).

2. Procédé selon la revendication 1, suivant lequel la gestion haut niveau de la machine comprend :
- la gestion de capteurs (12, 16) utiles à une fonction démarrage et redémarrage,
- et/ou au moins un algorithme d'arrêt/redémarrage automatiques,
- et/ou la gestion de l'état de charge et/ou le diagnostique d'une batterie.

3. Procédé selon la revendication 1 ou la revendication 2, suivant lequel l'unité de commande (1) comprend des moyens pour extraire et traiter des informations issues d'un bus de communication (18) inter systèmes du véhicule en vue de piloter ladite machine via une liaison protocolaire inter-systèmes ou dédiée (31).

4. Procédé selon l'une quelconque des revendications 1 à 3, suivant lequel les commandes de fonctionnement bas niveau qui sont transmises de façon redondante comprennent une commande d'inhibition du démarrage (Inhib_DEM).

5. Procédé selon l'une quelconque des revendications 1 à 4, suivant lequel les commandes de fonctionnement bas niveau qui sont transmises de façon redondante comprennent une commande de démarrage (DEM).

6. Procédé selon l'une quelconque des revendications 1 à 5, suivant lequel une ou plusieurs commandes de fonctionnement bas niveau (Vit) sont transmises, de façon redondante, de la machine (2) vers l'unité de commande (1), via des liaisons filaires additionnelles respectives (34).

7. Procédé selon la revendication 6, suivant lequel les commandes de fonctionnement bas niveau qui sont transmises de façon redondante comprennent une information (Vit) sur la vitesse de rotation de la machine (2).

8. Procédé selon l'une quelconque des revendications 1 à 7, suivant lequel la liaison de communication protocolaire est une liaison de type LIN dédiée ou Inter systèmes.

9. Procédé selon l'une quelconque des revendications 1 à 7, suivant lequel la liaison de communication protocolaire est une liaison de type CAN dédiée ou inter systèmes.

10. Procédé selon l'une quelconque des revendications 1 à 9, suivant lequel un signal référencé entre le potentiel de masse (-BATT) et le potentiel positif (+BATT) d'une batterie du véhicule est converti en un signal référencé entre la masse (-B) et une tension d'alimentation interne (Vdd) de la machine, et réciproquement.

11. Procédé selon l'une des revendications 1 à 10, suivant lequel le module de contrôle (20) est un module de contrôle et de puissance.

12. Machine électrique tournante polyphasée réversible (2) pour véhicule automobile, comprenant un module de contrôle (20) intégré dans ou à proximité immédiate de la machine et destiné à effectuer une gestion bas niveau de la machine et couplé à une unité de commande (1) distante, via une liaison de communication protocolaire (31) déterminée, ladite unité de commande (1) étant destinée à réaliser une gestion haut niveau de la machine, **caractérisée en ce qu'**elle comprend en outre une ou plusieurs entrées (202, 203) destinées à être couplées à des liaisons filaires additionnelles (32, 33), pour recevoir de l'unité de commande distante, de façon redondante, des commandes de fonctionnement bas niveau (Inhib_DEM, DEM) respectives.

13. Machine selon la revendication 12, dans laquelle la gestion haut niveau comprend:
- la gestion de capteurs utiles à la fonction démarrage et re-démarrage,
- et/ou au moins un algorithme d'arrêt/redémarrage automatique, et
- et/ou la gestion de l'état de charge et/ou le diagnostique d'une batterie.

14. Machine selon la revendication 12 or 13, dans laquelle les commandes de fonctionnement bas niveau qui sont reçues de façon redondante comprennent une commande d'inhibition du démarrage (Inhib_DEM).

15. Machine selon l'une quelconque des revendications 12 à 14, dans laquelle les commandes de fonctionnement bas niveau qui sont reçues de façon redondante comprennent une commande de démarrage (DEM).

16. Machine selon l'une quelconque des revendications 12 à 15, comprenant en outre une ou plusieurs sorties (204) destinées à être couplées à des liaisons filaires additionnelles (34), pour émettre à l'unité de commande distante, de façon redondante, des commandes de fonctionnement bas niveau (Vit) respectives.

17. Machine selon la revendication 16, dans laquelle les commandes de fonctionnement bas niveau qui sont émises de façon redondante comprennent une information (Vit) sur la vitesse de rotation de la machine (2).

18. Machine selon l'une quelconque des revendications 12 à 17, dans laquelle, le module de contrôle est couplé à ladite liaison de communication protocolaire via un émetteur-récepteur (LIN) ayant des bornes d'alimentation (+BATT,-BATT) reliées à des bornes (+BATT,-BATT) de la batterie (4) du véhicule par des liaisons qui sont distinctes de liaisons reliant des bornes d'alimentation (B+,B-) de la machine auxdites bornes de la batterie.

19. Machine selon l'une quelconque des revendications 12 à 18, dans laquelle la liaison de communication protocolaire est une ligne de bus LIN et l'émetteur-récepteur est un émetteur-récepteur LIN,

20. Machine selon l'une des revendications 18 ou 19, dans laquelle l'émetteur-récepteur comprend un premier (60) et un second (70) circuits' translateurs de niveaux, respectivement pour convertit un signal référencé entre le potentiel de masse (-BATT) et le potentiel positif (+BATT) de la batterie du véhicule en un signal référencé entre la masse (-B) et une tension d'alimentation interne (Vdd) de la machine, et réciproquement.

21. Unité de commande (1) pour véhicule automobile pour réaliser une gestion haut niveau d'une machine électrique tournante polyphasée réversible (2) distante, adaptée pour être couplée à un module de contrôle (20) de ladite machine, via une liaison de communication protocolaire (31) déterminée, ledit module effectuant une gestion bas niveau de ladite machine, **caractérisée en ce qu'**elle comprend en outre une ou plusieurs sorties (102, 103) destinées à être couplées à des liaisons filaires additionnelles (32, 33), pour émettre à la machine distante, de façon redondante, des commandes de fonctionnement bas niveau (Inhib_DEM, DEM) respectives.

22. Unité de commande selon la revendication 21, dans laquelle la gestion haut niveau de la machine comprend:
- la gestion de capteurs utiles à la fonction démarrage et re-démarrage,
- et/ou au moins un algorithme d'arrêt/redémarrage automatique, et
- et/ou la gestion de l'état de charge et/ou le diagnostique d'une batterie.

23. Unité de commande selon la revendication 21 ou 22, dans laquelle les commandes de fonctionnement bas niveau qui sont émises de façon redondante comprennent une commande d'inhibition du démarrage (Inhib_DEM).

24. Unité de commande selon l'une quelconque des revendications 21 à 23, dans laquelle les commandes de fonctionnement bas niveau qui sont émises de façon redondante comprennent une commande de démarrage (DEM).

25. Unité de commande selon l'une quelconque des revendications 21 à 24, comprenant en outre une ou plusieurs entrées (104) destinées à être couplées à des liaisons filaires additionnelles (34), pour recevoir de la machine distante, de façon redondante, des commandes de fonctionnement bas niveau (Vit) respectives.

26. Unité de commande selon la revendication 25, dans laquelle les commandes de fonctionnement bas niveau qui sont reçues de façon redondante comprennent une information (Vit) sur la vitesse de rotation de la machine (2).

27. Système comprenant une machine électrique tournante polyphasée réversible (2) selon l'une quelconque des revendication 12 à 20 et une unité de commande (1) selon l'une quelconque des revendications 21 à 26 pour réaliser la gestion haut niveau de la machine, dans lequel ladite machine et ladite unité de commande sont distantes l'une de l'autre.

28. Système selon la revendication 27, dans lequel l'unité de commande (1) est dédiée à la fonction de gestion haut niveau de la machine.

## Claims

1. Method for making a reversible polyphase rotary electrical machine (2) function in a motor vehicle, according to which a high-level management of the machine is implemented by a remote control unit (1) that transmits information, via a given protocol communication link (31), to a control module (20) integrated in or in the immediate vicinity of the said machine (2) that performs a low-level management of the machine (2) according to the said information, **characterised in that** one or more low-level operating commands (Inhib_DEM, DEM) are transmitted, in a redundant fashion, from the remote control unit (1) to the machine (2) via respective additional cable links (32, 33).

2. Method according to claim 1, according to which the high-level management of the machine comprises:
- the management of sensors (12, 16) useful to a start and restart function,
- and/or at least one automatic start/restart algorithm,
- and/or the management of the state of charge and/or the diagnosis of a battery.

3. Method according to claim 1 or claim 2, according to which the control unit (1) comprises means for extracting and processing information issuing from an inter-system communication bus (18) of the vehicle with a view to controlling the said machine via an inter-system or dedicated protocol link (31).

4. Method according to any one of claims 1 to 3, according to which the low-level operating commands that are transmitted in a redundant fashion comprise a command for inhibiting starting (Inhib_DEM).

5. Method according to any one of claims 1 to 4, according to which the low-level operating commands that are transmitted in a redundant fashion comprise a start command (DEM).

6. Method according to any one of claims 1 to 5, according to which one or more low-level operating commands (Vit) are transmitted, in a redundant fashion, from the machine (2) to the control unit (1), via respective additional cable links (34).

7. Method according to claim 6, according to which the low-level operating commands that are transmitted in a redundant fashion comprise information (Vit) on the speed of rotation of the machine (2).

8. Method according to any one of claims 1 to 7, according to which the protocol communication link is a link of the dedicated or inter-system LIN type.

9. Method according to any one of claims 1 to 7, according to which the protocol communication link is a link of the dedicated or inter-system CAN type.

10. Method according to any one of claims 1 to 9, according to which a signal referenced between the earth potential (-BATT) and the positive potential (+BATT) of a battery of the vehicle is converted into a signal referenced between earth (-B) and an internal supply voltage (Vdd) of the machine, and vice versa.

11. Method according to any one of claims 1 to 10, according to which the control module (20) is a control and power module.

12. Reversible polyphase rotary electrical machine (2) for a motor vehicle, comprising a control module (20) integrated in or in the immediate vicinity of the machine and intended to effect a low-level management of the machine and coupled to a remote control unit (1) via a given protocol communication link (31), the said control unit (1) being intended to effect a high-level management of the machine, **characterised in that** it also comprises one or more inputs (202, 203) intended to be coupled to additional cable links (32, 33) for receiving, from the remote control unit, in a redundant fashion, respective low-level operating commands (Inhib_DEM, DEM).

13. Machine according to claim 12, according to which the high-level management of the machine comprises:
- the management of sensors useful to the start and restart function,
- and/or at least one automatic start/restart algorithm,
- and/or the management of the state of charge and/or the diagnosis of a battery.

14. Machine according to claim 12 or 13, in which the low-level operating commands that are received in a redundant fashion comprise a start inhibition command (Inhib_DEM).

15. Machine according to claims 12 to 14, in which the low-level operating commands that are received in a redundant fashion comprise a start command (DEM).

16. Machine according to any one of claims 12 to 15, also comprising one or more outputs (204) intended to be coupled to additional cable links (34), in order to send, to the remote control unit, in a redundant fashion, respective low-level operating commands (Vit).

17. Machine according to claim 16, in which the low-level operating commands that are sent in a redundant fashion comprise information (Vit) on the speed of rotation of the machine (2).

18. Machine according to any one of claims 12 to 17, in which the control module is coupled to the said protocol communication link via a transceiver (LIN) having supply terminals (+BATT, -BATT) connected to terminals (+BATT, -BATT) of the vehicle battery (4) by links that are distinct from links connecting supply terminals (B+, B-) of the machine to the said battery terminals.

19. Machine according to any one of claims 12 to 18, in which the protocol communication link is a LIN bus line and the transceiver is a LIN transceiver.

20. Machine according to one of claims 18 or 19, in which the transceiver comprises first (60) and second (70) level-shifter circuits, respectively for converting a signal referenced between the earth potential (-BATT) and the positive potential (+BATT) of the vehicle battery into a signal referenced between the earth (-B) and an internal supply voltage (Vdd) of the machine, and vice versa.

21. Control unit (1) for a motor vehicle for effecting a high-level management of a remote reversible polyphase rotary electrical machine (2), adapted to be coupled to a control module (20) of the said machine, via a given protocol communication link (31), the said module effecting a low-level management of the said machine, **characterised in that** it also comprises one or more outputs (102, 103) intended to be coupled to additional cable links (32, 33), to send to the remote machine, in a redundant fashion, respective low-level operating commands (Inhib_DEM, DEM).

22. Control unit according to claim 21, in which the high-level management of the machine comprises:
- the management of sensors useful to the starting and restarting function,
- and/or at least one automatic stop/restart algorithm,
- and/or the management of the state of charge and/or the diagnosis of a battery.

23. Control unit according to claim 21 or 22, in which the low-level operating commands that are sent in a redundant fashion comprise a command for inhibiting the starting (Inhib_DEM).

24. Control unit according to any one of claims 21 to 23, in which the low-level operating commands that are sent in a redundant fashion comprise a starting command (DEM).

25. Control unit according to any one of claims 21 to 24, also comprising one or more inputs (104) intended to be coupled to additional cable links (34), for receiving from the remote machine, in a redundant fashion, respective low-level operating commands (Vit).

26. Control unit according to claim 25, in which the low-level operating commands that are received in a redundant fashion comprise information (Vit) on the speed of rotation of the machine (2).

27. System comprising a reversible polyphase rotary electrical machine (2) according to any one of claims 12 to 20 and a control unit (1) according to any one of claims 21 to 26 for performing the high-level management of the machine, in which the said machine and the said control unit are distant from each other.

28. System according to claim 27, in which the control unit (1) is dedicated to the function of high-level management of the machine.

## Patentansprüche

1. Verfahren zum Betreiben einer reversiblen mehrphasigen rotierenden elektrischen Maschine (2) in einem Kraftfahrzeug, bei dem eine High-Level-Regelung der Maschine durch eine entfernt angeordnete Steuereinheit (1) erfolgt, die Informationen über eine bestimmte Protokollkommunikationsverbindung (31) an ein in die besagte Maschine (2) integriertes oder in deren unmittelbarer Nähe angeordnetes Kontrollmodul (20) überträgt, das eine Low-Levef-Regelung der besagten Maschiene (2) in Abhängigkeit von den besagten Informationen durchführt **dadurch gekennzeichnet, dass** ein oder mehrere Low-Level-Betriebsbefehle (Inhib_DEM, DEM) in redundanter Weise von der entfernt angeordneten Steuereinheit (1) über entsprechende zusätzliche Drahtverbindungen (32, 33) an die Maschine (2) übertragen werden,

2. Verfahren nach Anspruch 1, bei dem die High-Level-Regelung der Maschine folgendes umfasst:
- die Regelung von Sensoren (12, 16) für eine Funktion Anlassen und Wiederanlassen
- und/oder mindestens einen Algorithmus für das automatische Abschalten/Wiederanlassen
- und/oder die Regelung des Ladezustands und/oder die Diagnose einer Batterie.

3. Verfahren nach Anspruch 1 oder Anspruch 2, bei dem die Steuereinheit (1) Mittel umfasst, um Informationen aus einem systemübergreifanden Kommunikationsbus (18) des Fahrzeugs auszulesen und zu verarbeiten, um die besagte Maschine über eine systemübergreifende oder dedizierte Protokollverbindung (31) zu steuern.

4. Verfahren nach einem der Ansprüche 1 bis 3, bei dem die Low-Level-Betriebsbefehle, die in redundanter Weise übertragen werden, einen Anlasssperrbefehl (Inhib_DEM) umfassen,

5. Verfahren nach einem der Ansprüche 1 bis 4, bei dem die Low-Level-Betriebsbefehle, die in redundanter Weise übertragen werden, einen Anlassbefehl (DEM) umfassen.

6. Verfahren nach einem der Ansprüche 1 bis 5, bei dem ein oder mehrere Low-Level-Betriebsbefehie (Vit) in redundanter Weise von der Maschine (2) über entsprechende zusätzliche Drahtverbindungen (34) an die Steuereinheit (1) übertragen werden.

7. Verfahren nach anspruch 6, bei dem die Low-Level-Betriebsbefehle, die in redundanter Weise übertragen werden, eine Information (Vit) über die Drehzahl der Maschine (2) umfassen.

8. Verfahren nach einem der Ansprüche 1 bis 7, bei dem die Protokollkommunikationsverbindung eine dedizierte oder systemübergreifende LIN-Verbindung ist.

9. Verfahren nach einem der Ansprüche 1 bis 7, bei dem die Protokollkommunikationsverbindung eine dedizierte oder systemübergreifende CAN-Verbindung ist.

10. Verfahren nach einem der Ansprüche 1 bis 9, bei dem ein zwischen dem Massepotential (-BATT) und dem Pluspotential (+BATT) einer Batterie des Fahrzeugs referenziertes Signal in ein zwischen der Masse (-B) und einer internen Versorgungsspannung (Vdd) der Maschine referenziertes Signal umgewandelt wird und umgekehrt.

11. Verfahren nach einem der Ansprüche 1 bis 10, bei dem das Kontrollmodul (20) ein Kontroll- und Leistungsmodul ist.

12. Reversible mehrphasige rotierende elektrische Maschine (2) für Kraftfahrzeuge, umfassend ein in die Maschine integriertes oder in deren unmittelbarer Nähe angeordnetes Kontrollmodul (20) für die Durchführung einer Low-Level-Regelung der Maschine, das über eine bestimmte Protokollkommunikationsverbindung (31) an eine entfernt angeordnete Steuereinheit (1) angeschlossen ist, wobei die besagte Steuereinheit (1) dazu bestimmt ist, eine High-Level-Regelung der Maschine durchzuführen, **dadurch gekennzeichnet, dass** sie außerdem einen oder mehrere Eingänge (202, 203) umfasst, die für den Anschluss an zusätzliche Drahtverbindungen (32, 33) bestimmt sind, um von der entfernt angeordneten Steuereinheit in redundanter Weise entsprechende Low-Levei-Betriebsbefehle (lnhib_DEM, DEM) zu empfangen.

13. Maschine nach Anspruch 12, bei der die High-Level-Regelung folgendes umfasst:
- die Regelung von Sensoren für die Funktion Anlassen und Wiederanlassen
- und/oder mindestens einen Algorithmus für das automatische Abschalten/Wiederanlassen
- und/oder die Regelung des Ladezustands und/oder die Diagnose einer Batterie.

14. Maschine nach Anspruch 12 oder 13, bei der die Low-Level-Betriebsbefehle, die in redundanter Weise empfangen werden, einen Anlasssperrbefehl (Inhib_DEM) umfassen.

15. Maschine nach einem der Ansprüche 12 bis 14, bei der die Low-Level-Betriebsbefehle, die in redundanter Weise empfangen werden, einen Anlassbefehl (DEM) umfassen.

16. Maschine nach einem der Ansprüche 12 bis 15, die einen oder mehrere Ausgänge (204) umfasst, die für den Anschluss an zusätzliche Drahtverbindungen (34) bestimmt sind, um an die entfernt angeordnete Steuereinheit in redundanter Weise entsprechende Low-Level-Betriebsbefehle (Vit) zu übertragen.

17. Maschine nach Anspruch 16, bei der die Low-Level-Betriebsbefehle, die in redundanter Weise übertragen werden, eine Information (Vit) über die Drehzahl der Maschine (2) umfassen.

18. Maschine nach einem der Ansprüche 12 bis 17, bei der das Kontrollmodul an die besagte Protokollkommunikationsverbindung über einen Sender/Empfänger (LIN) angeschlossen ist, der Versorgungsklemmen (+BATT, -BATT) aufweist, die an Klemmen (+BATT, -BATT) der Fahrzeugbatterie (4) über Verbindungen angeschlossen sind, die von Verbindungen zum Anschluss von Versorgungsklemmen (B+, B-) der Maschine an die besagten Batterieklernmen verschieden sind.

19. Maschine nach einem der Ansprüche 12 bis 18, bei der die Protokollkommunikationsverbindung eine LIN-Busleitung und der Sender/Empfänger ein LIN-Sender/Empfänger ist.

20. Maschine nach einem der ansprüche 18 oder 19, bei der der Sender/Empfänger eine erste (60) und eine zweite (70) Level-Shifter-Schaltung umfasst, um ein zwischen dem Massepotential (-BATT) und dem Pluspotential (+BATT) der Fahrzeugbatterie referenziertes Signal in ein zwischen der Masse (-B) und einer internen Versorgungsspannung (Vdd) der Maschine referenziertes Signal umzuwandeln und umgekehrt.

21. Steuereinheit (1) für Kraftfahrzeuge für die Durchführung einer High-Level-Regelung einer entfernt angeordneten reversiblen mehrphasigen rotierenden elektrischen Maschine (2), die über eine bestimmte Protokollkommunikationsverbindung (31) an ein Kontrollmodul (20) der besagten Maschine angeschlossen werden kann, wobei das besagte Modul eine Low-Level-Regelung der besagten Maschine durchführt, **dadurch gekennzeichnet, dass** sie außerdem einen oder mehrere Ausgänge (102, 103) umfasst, die für den Anschluss an zusätzliche Drahtverbindungen (32, 33) bestimmt sind, um an die entfernt angeordnete Maschine in redundanter Weise entsprechende Low-Level-Betriebsbefehle (Inhib_DEM, DEM) zu übertragen.

22. Steuereinheit nach Anspruch 21, bei der die Low-Level-Regelung der Maschine folgendes umfasst:
- die Regelung von Sensoren für die Funktion Anlassen und Wiederanlassen
- und/oder mindestens einen Algorithmus für das automatische Abschalten/Wiederanlassen
- die des Ladezustands und/oder die Diagnose einer Batterie,

23. Steuereinheit nach Anspruch 21 oder 22, bei der die Low-Level-Betriebsbefehle, die in redundanter Weise übertragen werden, einen Anlasssperrbefehl (Inhib_DEM) umfassen.

24. Steuereinheit nach einem der Ansprüche 21 bis 23, bei dem die Low-Level-Betriebsbefehle, die in redundanter Weise übertragen werden, einen Anlassbefehl (DEM) umfassen.

25. Steuereinheit nach einem der Ansprüche 21 bis 24, die außerdem einen oder mehrere Eingänge (104) umfasst, die für den Anschluss an zusätzliche Drahtverbindungen (34) bestimmt sind, um von der entfernt angeordneten Maschine in redundanter Weise entsprechende Low-Level-Betriebsbefehie (Vit) zu empfangen.

26. Steuereinheit nach Anspruch 25, bei der die Low-Level-Betriebsbefehle, die in redundanter Weise empfangen werden, eine Information (Vit) über die Drehzahl der Maschine (2) umfassen.

27. System, umfassend eine reversible mehrphasige rotierende elektrische Maschine (2) nach einem der Anspruche 12 bis 20 und eine Steuereinheit (1) nach einem der Ansprüche 21 bis 26 für die Durchführung der High-Level-Regelung der Maschine, bei dem die besagte Maschine und die besagte Steuereinheit entfernt voneinander angeordnet sind,

28. System nach Anspruch 27, bei dem die Steuereinheit (11) eine dedizierte Steuereinheit für die Funktion High-Level-Regelung der Maschine ist.
